# EUROPÄISCHE PATENTSCHRIFT

(11) **EP 4 356 209 B1**
(45) Veröffentlichungstag und Bekanntmachung des Hinweises auf die Patenterteilung: **06.05.2026**
(21) Anmeldenummer: 22736200.1
(22) Anmeldetag: 14.06.2022
(51) Int. Cl.: G05B 19/418, G05B 13/02, G05B 23/02

(54) **ÜBERWACHUNG DER PRODUKTION VON WERKSTOFFPLATTEN, INSBESONDERE HOLZWERKSTOFFPLATTEN, INSBESONDERE UNTER VERWENDUNG EINER SELBSTORGANISIERENDEN KARTE**
MONITORING THE PRODUCTION OF MATERIAL BOARDS, IN PARTICULAR ENGINEERED WOOD BOARDS, IN PARTICULAR USING A SELF-ORGANIZING MAP
SURVEILLANCE DE LA PRODUCTION DE PANNEAUX DE MATÉRIAU, EN PARTICULIER DE PANNEAUX EN MATÉRIAU DÉRIVÉ DU BOIS, EN PARTICULIER À L'AIDE D'UNE CARTE AUTO-ORGANISATRICE

(30) Priorität: 14.06.2021 DE 102021206044
(43) Veröffentlichungstag der Anmeldung: 24.04.2024
(73) Patentinhaber: Fraunhofer-Gesellschaft zur Förderung der angewandten Forschung e.V., 80686 München (DE)
(72) Erfinder: PFROMMER, Julius, 76131 Karlsruhe (DE); HASTEROK, Constanze, 76161 Karlsruhe (DE); REHAK, Josephine, 76131 Karlsruhe (DE); WOLL, Jürgen, 75031 Eppingen (DE); STÖRNER, Patrick, 75031 Eppingen (DE)
(74) Vertreter: Pfenning, Meinig & Partner mbB
(86) Internationale Anmeldenummer: PCT/EP2022/066201
(87) Internationale Veröffentlichungsnummer: WO 2022/263458

(56) Entgegenhaltungen:
- EP-A1- 3 282 399
- EP-A1- 3 591 482
- WO-A1-2020/057937
- DE-A1- 102016 102 931
- "Kommunikation und Bildverarbeitung in der Automation : Technologies for Intelligent Automation : Ausgewählte Beiträge der Jahreskolloquien KommA und BVAu 2018", vol. 8, 1 January 2018, SPRINGER BERLIN HEIDELBERG, Berlin, Heidelberg, ISBN: 978-3-662-59895-5, ISSN: 2522-8579, article ALEXANDER VON BIRGELEN ET AL: "Anomaly Detection and Localization for Cyber-Physical Production Systems with Self-Organizing Maps : Intelligent Methods for the Factory of the Future", pages: 55 - 71, XP055729182, DOI: 10.1007/978-3-662-57805-6_4

## Beschreibung

Die Erfindung betrifft Verfahren zum Überwachen einer Produktion einer Werkstoffplatte, insbesondere einer Holzwerkstoffplatte, insbesondere mittels einer entsprechend angelernten selbstorganisierenden Karte, SOM.

Bei der Produktion von Werkstoffplatten, insbesondere Holzwerkstoffplatten und bevorzugt Holzspanwerkstoffplatten wie beispielsweise Grobspanplatten (OSB), Holzspanwerkstoffplatten (Spanplatten) und mitteldichte Faserplatten (MDF-Platten) sind eine Vielzahl an Produktions- oder Prozessschritten hintereinander geschaltet. Die Hauptschritte umfassen dabei typischerweise eine Holzzerspanung, eine Spansortierung, eine Spanfilterung, eine Spantrocknung, eine Beleimung, eine Streuung und eine Pressung. Alle Prozesse werden durch eine Vielzahl an Sensoren überwacht. Dabei werden die gewonnenen Informationen in Form der erfassten Sensordaten typischerweise nur teilweise für eine automatische Regelung der jeweiligen Prozessschritte bzw. der gesamten Produktionskette herangezogen. Dies liegt vor allem in der Komplexität des Werkstoffes Holz als auch des Herstellungsprozesses begründet.

Entsprechend werden Qualitätseinbußen des Produkts, welche durch Anomalien im Prozess verursacht werden, oftmals erst um mehrere Stunden zeitlich verzögert in aufwändigen Labormessungen jeweiliger Stichproben festgestellt. Ebenso sind viele sich über einen Längeren Zeitraum anbahnende Produktionsstörungen nicht frühzeitig erkennbar, die dann zu langen Anlagenstillständen und Materialverlust (Holz und Leim) führen.

Ein menschlicher Experte, der im Allgemeinen schon jahrelange Erfahrung im Bedienen der genutzten Produktionsanlagen hat, reguliert dann aufgrund seiner persönlichen Erfahrung die jeweiligen Produktionsparameter in den unterschiedlichen Produktionsschritten bzw. der gesamten Produktion nach. Auch beobachtet er Störmeldungen oder Anzeigen des Steuerungssystems um produktionsrelevante Veränderungen zu erkennen. Aber gerade Störmeldungen oder Alarmierungen erscheinen in Steuerungssystemen meist erst bei Über- oder Unterschreitung von definierten Werten, z.B. Grenzwerten. Prozessbedingte anomale Werte in einem Produktionszyklus können herkömmliche Steuerungsprogramme nicht in allen Zuständen bei so einem komplexen Prozess erfassen. Selbstverständlich kann ein solcher Experte auch anhand der jeweils aktuellen Sensordaten Abweichungen, d.h. Anomalien in den jeweiligen Produktionsschritten erkennen und entsprechende Produktionsparameter korrigieren. In beiden Fällen kommt Knowhow zum Einsatz, welches über Jahre hinweg aufgebaut wurde, nicht umfassend dokumentiert werden kann und somit nur schwer weitergegeben werden kann. Entsprechend ist das Ausfallrisiko beträchtlich.

Hinzu kommt, dass die Werkstoffplatten-Produktionsanlagen, insbesondere Holzwerkstoffplatten-Produktionsanlagen, im Allgemeinen sehr groß sind, d.h. eine Produktionsanlage mit den zugehörigen hintereinander geschalteten Produktionsmaschinen, welche die jeweiligen (aufeinander abfolgenden) Produktionsschritte umsetzen, typischerweise eine Länge von mehreren Hundert Meter haben. Entsprechend ist die Produktion schlecht zu überwachen, da vor Ort an einer jeweiligen Produktionsmaschine oft der Überblick über die gesamte Produktionsanlage fehlt. Erschwerend kommt hier gerade bei Holzwerkstoffen hinzu, dass die Arbeitsmaterialien großen Schwankungen, beispielsweise in Feuchte und/oder Härte unterliegen, zugleich jedoch Schwankungen in den Ausgangsmaterialien und auch den einzelnen Produktionsschritten oft auch in nachfolgenden Produktionsschritten ausgeglichen werden können, oder aber durch vorhergehende Produktionsschritte bedingt sind. Daher ist eine festgestellte signifikante Abweichung eines Ist-Wertes von einem Soll-Wert auch nicht zwingend ein Qualitätsmangel oder ein eindeutiger Hinweis für eine Produktionsstörung, was die Überwachung der Produktion derartiger Werkstoffplatten, insbesondere Holzwerkstoffplatten, weiter erschwert.

Im Stand der Technik ist aus der WO 2020/057937 A1 bereits ein Verfahren zur Parametrisierung eines Anomalieerkennungsverfahrens, das basierend auf einer Vielzahl von Sensordatenpunkten ein dichtebasiertes Clusterverfahren durchführt, offenbart. Das Verfahren umfasst a) Abbilden eines jeden Sensordatenpunkts in einem Dateraum in einen Pixeldatenpunkt in einem Pixelraum, b) Nachbilden mindestens einer Operation des dichtebasierten Clusterverfahrens im Dateraum durch mindestens eine Pixeloperation im Pixelraum, c) Empfangen von mindestens einem Parameterwert für jeden Parameter des dichtebasierten Clusterverfahrens, d) Anwenden der mindestens einen Pixeloperation entsprechend den Parameterwerten auf die Pixeldatenpunkte, e) Ausgeben eines Clusterergebnisses in visueller Form im Pixelraum, und f) Bereitstellen der empfangenen Parameterwerte für das Anomalieerkennungsverfahren.

Ferner offenbart EP 3 282 399 A1 ein Verfahren und ein Diagnosesystem zur verbesserten Erkennung einer Prozessanomalie einer technischen Anlage, bei dem zunächst eine selbstorganisierende Karte unter Verwendung der historischen Prozessdaten als Gutzustände der Anlage trainiert wird, wobei die Gutzustände zur Ermittlung der zeitliche Reihenfolge bzw. eines Pfads der getroffenen Knoten sowie der Toleranzen der Treffer der Neuronen genutzt werden und wobei Schwellwerte für den euklidischen Abstand für die Gutzustände ermittelt und gespeichert werden, und bei dem die aktuellen Prozessdaten der Anlage in Form eines Zustandsvektors mit Hilfe der trainierten selbstorganisierenden Karte ausgewertet werden.

Es stellt sich somit die technische Aufgabe, die Produktion von Werkstoffplatten, insbesondere die Produktion von Holzwerkstoffplatten, und gerade die kontinuierliche Produktion von Holzwerkstoffplatten beherrschbarer zu machen.

Diese Aufgabe wird durch die Gegenstände der unabhängigen Patentansprüche gelöst. Vorteilhafte Ausführungsformen ergeben sich aus den abhängigen Patentansprüchen und der Beschreibung.

Ein Aspekt betrifft ein Anlernverfahren für eine selbstorganisierende Karte, Self-Organizing Map (SOM), zum Überwachen einer Produktion einer Werkstoffplatte, insbesondere einer Holzwerkstoffplatte wie einer OSB- und/oder MDF- und/oder Spanplatte. Die Produktion ist dabei bevorzugt eine kontinuierliche Produktion mit einer Vielzahl an (insbesondere hintereinander geschalteten) Produktionsschritten, bei welcher das Rohprodukt in jeweils im Produktionsschritt veredelter Form an den nächsten Produktionsschritt weitergereicht wird. Eine SOM wird oft auch als Kohonenkarte oder Kohonennetz bezeichnet. Derartige SOMs sind eine Art von künstlichen neuronalen Netzen, welche als
unüberwachtes Lernverfahren multidimensionale Eingabedaten eines Eingabedatenraumes auf eine planare Struktur, den Kartenraum, abbilden. Dadurch entsteht eine topologische Merkmalskarte.

Ein Verfahrensschritt des Anlernverfahrens ist dabei ein jeweiliges Erfassen von Sensordaten in einem oder mehreren der (insbesondere aufeinander abfolgenden) Produktionsschritte der Produktion der Werkstoffplatte. Dieses Erfassen oder Bereitstellen erfolgt dabei durch jeweilige Sensoren der zugeordneten (Werkstoffplatten-)Produktionsanlage. Die Werkstoffplatten-Produktionsanlage kann als Gesamt-Produktionsanlage in unterschiedliche Produktionsmaschinen unterteilt werden, welche den jeweiligen Produktionsschritten zugeordnet sind. Bevorzugt werden also jeweils Sensordaten in zumindest einem solchen Produktionsschritt, bevorzugt aber mehreren oder allen Produktionsschritten der Produktion erfasst. In jedem und damit für jeden Produktionsschritt können dabei eine Vielzahl von Sensordaten von einer Vielzahl jeweiliger Sensoren der Produktionsmaschine erfasst bzw. bereitgestellt werden. Es können aber auch nur Sensordaten von jeweils einem einzigen Sensor einer Produktionsmaschine und damit eines Produktionsschritts erfasst oder bereitgestellt werden. Jedem Produktionsschritt können sowohl mehrere Sensoren unterschiedlicher Art als auch mehrere gleichartige Sensoren, oder Mischungen aus unterschiedlichen und gleichartigen Sensoren zugeordnet sein. Beispielsweise kann also in einem Produktionsschritt zugleich durch einen Temperatursensor eine Temperatur und durch eine Reihe von mehreren Drucksensoren, also gleichartigen Sensoren, ein Druck erfasst werden. Die Sensordaten werden dann entsprechend an eine Recheneinheit bereitgestellt. Die erfassten bzw. bereitgestellten Sensordaten können dabei teilweise oder in Gänze durch die Recheneinheit vor weiteren Schritten vorverarbeitet werden, wie dies weiter unten noch beschrieben ist. Sensordaten gleichartiger Sensoren können dabei Daten gleicher oder ineinander umrechenbarer Einheiten bereitstellen.

Die Sensordaten werden bevorzugt nach dem Erfassen und vor weiteren Verfahrensschritten wie dem noch beschriebenen Anlernen, dem noch beschriebenen Abbilden auf einen zweidimensionalen Kartenraum, dem noch beschriebenen ermitteln von Abständen und/oder auch dem Vorverarbeiten mittels eines oder mehrerer statistischer Verfahren skaliert. Bevorzugt werden also sowohl die Sensordaten, welche zum Anlernen der SOM verwendet werden, als auch die Sensordaten, welche von der SOM ausgewertet werden (Abstandsberechnung zu Referenzpunkten, Abbilden in den zweidimensionalen Kartenraum, etc.), skaliert. Unter einem Skalieren kann hier verstanden werden, dass auf Basis der Trainingsdaten, der für das Anlernen verwendeten Sensordaten, ein Skalierungsfaktor berechnet wird, der dafür sorgt, dass die Verteilung innerhalb jedes Merkmals oder "Features" der Produktion, also innerhalb aller Messwerte eines Sensors, einen Mittelwert von 0 und eine Standardabweichung von 1 aufweist. Es sind auch andere Skalierungen möglich, wie z.B. Skalierung der Verteilung auf einen Wertebereich zwischen 0 und 1. Der beim Anlernen ermittelte Skalierungsfaktor wird dann immer sowohl auf die Trainingsdaten, als auch auf die Daten, die ausgewertet werden sollen, angewendet, was die Sensordaten vergleichbar macht und die verlässliche Verarbeitung durch die SOM sicherstellt.

Ein weiterer Verfahrensschritt ist das Anlernen der selbstorganisierenden Karte mit den Sensordaten, bei welchen es sich sowohl um vorverarbeitete oder teilweise vorverarbeitete oder auch nicht vorverarbeitete, d.h. die erfassten Sensordaten als solche handeln kann. Alle der genannten Sensordaten sind jedoch bevorzugt skaliert im beschriebenen Sinne. Dabei bildet die selbstorganisierende Karte einen durch die vorverarbeiteten und/oder erfassten Sensordaten aufgespannten Eingabedatenraum der Sensordaten (auch Beobachtungsraum genannt) auf ein zweidimensionales Gitter, den Kartenraum ab. Der Eingabedatenraum hat entsprechend viele (mehr als zwei) Dimensionen, insbesondere so viele Dimensionen wie es (zeitlich parallele) Sensormessungen gibt. Beide Räume sind hier als Räume in mathematischem Sinne zu verstehen. Im Eingabedatenraum der Sensordaten bestimmt die Menge aller zum selben Zeitpunkt oder mit einem vordefinierten zeitlichen Versatz stattgefunden haben den Sensormessungen (wie Druck, Temperatur und die weiter unten ausführlicher spezifizierten Größen bzw. Parameter) jeweils einen Sensordatenpunkt. Die Sensordatenpunkte sind somit Vektoren im Eingabedatenraum bzw. Beobachtungsraum. Da die Sensordatenpunkte im Eingabedatenraum als Beobachtungsraum liegen, können sie auch als Beobachtungspunkte bezeichnet werden. Im Beobachtungsraum werden Referenzpunkte erlernt, die eine Dichteverteilung der vorverarbeiteten und/oder erfassten Sensordaten repräsentieren. Unter der Dichteverteilung kann die Verteilung der Datenpunkte im Beobachtungsraum verstanden werden. Jedem Referenzpunkt entspricht ein Knotenpunkt ("node") auf dem zweidimensionalen Gitter im Kartenraum. Das Anlernen erfolgt in einer Recheneinheit, welche direkt oder mittelbar, beispielsweise über eine Sensordaten-Datenbank, mit den Sensoren gekoppelt ist.

Dies hat den Vorteil, dass ein unüberwachtes Lernverfahren genutzt wird und zur Auswertung des Modells in dem weiter unten beschriebenen Planungs- oder Überwachungsverfahren Trainingsdaten nicht herangezogen werden müssen. Da das gelernte Modell im Wesentlichen aus den Referenzpunkten im Beobachtungsraum und deren Entsprechung im Kartenraum besteht, wird sehr wenig Speicherplatz benötigt und auch die Auswertung des Modells wird für einen gegebenen Datenpunkt schnell durchgeführt. Es hat sich auch gezeigt, dass das Anlernverfahren für gegebene Werkstoffplatten-Produktionsanlagen, insbesondere auf eine kontinuierliche Produktion ausgelegte Werkstoffplatten-Produktionsanlagen, trotz der Vielzahl an stark variierenden Sensordaten sehr robust ist.

Das Anlernverfahren kann analog auch auf andere mathematischen Methoden angewandt werden. Im beschriebenen Anlernverfahren kann somit statt der beschriebenen SOM auch ein äquivalentes wirkgleiches unüberwachtes Lernverfahren stehen.

In einer vorteilhaften Ausführungsform ist dabei vorgesehen, dass die Sensordaten mit einem vorgegebenen Filterkriterium überprüft werden, wobei das Anlernen ausschließlich mit Sensordaten erfolgt, welche das vorgegebene oder vorgebbare Filterkriterium erfüllen. Insbesondere kann das Filterkriterium eine Mindestbetriebsdauer einer Produktionsmaschine mit dem zu den jeweiligen Sensordaten zugehörigen Sensor umfassen und/oder ein Mindestmaß an zeitlicher Konvergenz der Werte der Sensordaten des entsprechenden Sensors. Dafür können die Sensordaten, beispielsweise über einen entsprechenden Zeitstempel, mit weiteren Daten verknüpft werden, aus denen sich zum Beispiel besagte Mindestbetriebsdauer der Produktionsmaschine oder auch andere den Sensordaten zuzuordnende Umstände ergeben. Das hat den Vorteil, dass der Lernprozess verbessert wird und insbesondere die angelernte selbstorganisierende Karte auch in späteren Anwendungen robuster bezüglich Anomalien ist bzw. diese besser erkennt.

In einer weiteren vorteilhaften Ausführungsform ist vorgesehen, dass die Sensordaten einen Zeitstempel aufweisen und für das Anlernen der selbstorganisierenden Karte diejenigen Sensordaten korreliert genutzt werden, deren zeitlicher Versatz gemäß Zeitstempel einem zeitlichen Versatz der zu den unterschiedlichen Sensordaten gehörigen (insbesondere aufeinander abfolgenden) Produktionsschritten entspricht. Es werden also Sensordaten, welche beispielsweise die gleiche Charge Werkstoffplatten oder die gleiche Produktionsrezeptur betreffen, korreliert für das Anlernen genutzt. Der zeitliche Versatz der an einer vorgegebenen Werkstoffplatte durchgeführten Produktionsschritte beim Durchlaufen der Produktion wird somit durch den entsprechenden zeitlichen Versatz der für das Anlernen der selbstorganisierenden Karte genutzten Sensordaten kompensiert. Das hat den Vorteil, dass die genutzten Sensordaten sich jeweils auf die gleiche Werkstoffplatte, beziehen und somit wesentlich besser für die Planung und Überwachung der Produktion der jeweiligen Werkstoffplatte, deren Eigenschaften ja letztlich von Interesse sind, geeignet sind. Ebenso vorteilhaft ist dies für die Überwachung von Produktionsstörungen, da die einzelnen Produktionsschritte über die Werkstoffplatten und Produktionsrezepturen miteinander verknüpft sind. Damit wird die selbstorganisierende Karte nochmals robuster und in dem Erkennen einer Anomalie bzw. Vorhersagen einer Qualität verlässlicher.

Ein weiterer Aspekt betrifft ein Verfahren zum Überwachen der besagten Produktion einer Werkstoffplatte. Das Überwachen der Produktion kann dabei ein Überwachen einer Produktqualität und/oder ein Überwachen der Produktionsanlage selber umfassen, wobei letzteres erlaubt, auch sich über einen Längeren Zeitraum anbahnende Produktionsstörungen frühzeitig, das heißt vor Anlagenstillständen und Materialverlust, zu erkennen. In dem Verfahren werden anhand von zur Verfügung stehender Messwerte zuverlässigere Erkenntnisse über den Zustand der Produktionsanlage gewonnen.

Ein Verfahrensschritt ist dabei wieder ein jeweiliges Erfassen oder Bereitstellen von Sensordaten in dem oder den (insbesondere aufeinander abfolgenden) Produktionsschritten der Produktion der Werkstoffplatte durch die jeweiligen Sensoren der Werkstoffplatten-Produktionsanlage. Wie auch zuvor können die erfassten Sensordaten dabei in Teilen oder auch sämtlich vorverarbeitet werden, wie dies weiter unten noch beschrieben ist. Die vorverarbeiteten und/oder erfassten bzw. bereitgestellten Sensordaten können dabei durch eine Recheneinheit unter Verwendung von Referenzpunkten wie im Folgenden näher beschrieben ausgewertet werden.

Entsprechend ist ein weiterer Verfahrensschritt ein Ermitteln von Referenzpunkten in einem vieldimensionalen Eingabedatenraum der bei einem vollständigen Erfassen verfügbaren Sensordaten, dem Beobachtungsraum, wobei die Referenzpunkte eine Dichteverteilung (bevorzugt vollständig erfasster) Sensordaten in dem Beobachtungsraum repräsentieren. Vollständig kann hier bedeuten, dass von den Sensordaten, die überwacht werden sollen, auch bei allen tatsächlich Werte erfasst wurden. Der Beobachtungsraum kann hier also explizit auch nicht alle theoretisch im Produktionsprozess verfügbaren Sensordaten umfassen, sondern nur die, die für das Überwachen erfasst werden sollen. Es können hier die aus dem oben beschriebenen Anlernverfahren bekannten Referenzpunkte, welche mit der SOM oder einem anderen Lernverfahren erlernt wurden, verwendet werden. Alternativ können die Referenzpunkte auch mit anderen Methoden ermittelt werden, beispielsweise durch ein Ermitteln von einem oder mehreren Schwerpunkten der Dichteverteilung oder dergleichen. Ein Beispiel ist hier eine Clusteranalyse, bei welcher in den Sensordaten Cluster identifiziert werden, für jedes Cluster ein Schwertpunkt berechnet wird und die Schwerpunkte dann die jeweiligen Referenzpunkte bilden.

Ein Verfahrensschritt ist ein Ermitteln zumindest eines Abstands und/oder zumindest eines Abstandmittelwertes zwischen einem den erfassten Sensordaten entsprechenden Beobachtungspunkt, einem Sensordatenpunkt im vieldimensionalen Eingabedatenraum, und mindestens einem nächstliegenden Referenzpunkt im Beobachtungsraum durch die Recheneinheit. Es können dabei auch die Abstände zwischen dem Beobachtungspunkt und mehreren nächstliegenden Referenzpunkten im Beobachtungsraum ermittelt werden, wobei der im Folgenden referenzierte Abstand in diesem Fall bevorzugt der Abstand zum Mittelpunkt der Referenzpunkte ist. In einem nächsten Verfahrensschritt wird der Produktionsschritt und/oder der Sensor und/oder die Sensorgruppe, dessen oder deren Sensordaten den ermittelten Abstand und/oder den ermittelten Abstandmittelwert bestimmen, insbesondere als größter Einzelfaktor den ermittelten Abstand und/oder den ermittelten Abstandmittelwert bestimmen und somit am meisten zur entsprechenden Abweichung oder Anomalie beitragen, durch die Recheneinheit bestimmt. Insbesondere können auch für mehrere oder alle Produktionsschritte und/oder Sensoren und/oder Sensorgruppen die Einzelbeiträge zum ermittelten Abstand bestimmt werden. Dies erlaubt beispielweise eine Ranglistenfolge aus welcher ersichtlich ist, wie der ermittelte Abstand im Wesentlichen zu Stande kommt.

Ein weiterer Verfahrensschritt ist ein Anzeigen des zumindest eines ermittelten Produktionsschrittes und/oder des zumindest einen ermittelten Sensors und/oder des zumindest einen ermittelten Abstandes und/oder des zumindest einen ermittelten Abstandsmittelwertes durch eine Anzeigeeinheit, welche auch Teil der Recheneinheit sein kann. Der Abstand kann dabei als Anomalie-Indikator verstanden und angezeigt werden, da er, wie sich gezeigt hat, mit dem Auftreten von Anomalien im Produkt und/oder der Produktionsanlage korreliert. Das Anzeigen kann auch in Form eines elektronischen Signals an eine weitere elektronische Einheit erfolgen. Alternativ oder ergänzend kann auch eine optische und/oder akustische Warnung ausgegeben werden, beispielsweise, wenn der ermittelte Produktionsschritt und/oder der ermittelte Sensor und/oder der ermittelte Abstand eine vorgegebene Bedingung erfüllen, wie sie bei einem Überschreiben des unten noch beschriebenen zulässigen Maximalabstandes für den Beobachtungspunkt vom nächstliegenden Referenzpunkt gegeben sein kann.

Ein weiterer Verfahrensschritt kann ein Ausgeben einer entsprechenden Steueranweisung und/oder Überprüfungsabweisung an eine menschliche Bedienperson sein. Alternativ oder ergänzend kann auch ein entsprechendes Steuern des ermittelten Produktionsschrittes oder des zum ermittelten Sensor beziehungsweise zur ermittelten Sensorgruppe gehörigen Produktionsschritts der Holzwerkstoffplatten-Produktionsanlage erfolgen.

Das hat den Vorteil, dass Anomalien und damit potentielle Qualitätseinbußen und/oder sich anbahnende Produktionsstörungen, gerade sich über einen Längeren Zeitraum anbahnende Produktionsstörungen frühzeitig, die dann zu langen Anlagenstillständen und Materialverlust (Holz und Leim) führen, frühzeitig erkannt werden können, und entsprechende Gegenmaßnahmen schnell ergriffen werden können. Parameter der Produktionsanlage können gezielt so gewählt werden, dass sich langsam entwickelnde Störungen in der Produktionsanlage vermieden werden können. Insbesondere können einem Nutzer gezielte Hinweise gegeben werden, an welcher Stelle in der Produktion, in welchem Produktionsschritt und an welchem Sensor Anomalien auftreten bzw. Veränderungen, welche maßgeblich für auftretende Anomalien sind.

In einer vorteilhaften Ausführungsform ist vorgesehen, dass ein zulässiger Maximalabstand und/oder zulässiger Maximalabstandsmittelwert für den Beobachtungspunkt/Sensordatenpunkt von dem nächstliegenden Referenzpunkt oder den nächstliegenden Referenzpunkten vorgegeben wird. Dabei kann der Maximalabstand/Maximalabstandsmittelwert insbesondere als Funktion des mit dem zumindest einen Bereich in dem Kartenraum verknüpften Qualitäts-Indikatorwert vorgegeben sein. In diesem Fall erfolgt bevorzugt auch ein Abbilden der erfassten Sensordaten auf den zweidimensionalen Kartenraum durch den nächstliegenden Referenzpunkt und dessen Entsprechung im Kartenraum, beispielsweise mittels der wie oben beschriebenen angelernten SOM oder einem entsprechenden Verfahren durch die Recheneinheit. Es erfolgt hier auch ein Überprüfen, ob der ermittelte Abstand/der ermittelte Abstandmittelwert größer ist als der zulässige Maximalabstand/ Maximalabstandsmittelwert und, falls dies der Fall ist, insbesondere nur falls dies der Fall ist, ein Ermitteln des Produktionsschrittes und/oder des Sensors und, alternativ oder ergänzend, ein Anzeigen des ermittelten Produktschrittes und/oder Sensors und, alternativ oder ergänzend, ein Ausgeben einer optischen und/oder akustischen Warnung und/oder der Steueranweisung und/oder Überprüfungsanweisung an eine elektronische Einheit und/oder einen Nutzer. Das hat den Vorteil, dass die Produktion nochmals beherrschbarer wird, da die Recheneinheit bereits entscheiden kann oder darauf hinweisen kann, dass eine auftretende Anomalie, welche sich in dem ermittelten Abstand/Abstandmittelwert äußert, kritisch ist oder nicht, mithin ein Eingreifen eines Nutzers oder eines Regelprozesses erfordert oder nicht. Ist im Kartenraum auch ein entsprechender Qualitäts-Indikatorwert vorgegeben, so können auch laufend Aussagen über eine zu erwartende Produktqualität und/oder eine sich möglicherweise entwickelnde Störung getroffen werden bzw. es wird dem Nutzer nochmals deutlicher, inwiefern eine Veränderung in der Produktion, eine Anomalie, potentiell eine Qualitätseinbuße und/oder eine Störung im Produktionsablauf mit sich bringt oder nicht.

Der hier referenzierte Qualitäts-Indikatorwert kann ein relativer Qualitäts-Indikatorwert sein, der eine Qualität (im Sinne einer Beschaffenheit) nicht absolut sondern als Abweichung relativ zu einer bekannten (d.h. insbesondere in der Produktion erprobten und für geeignet für die Produktion befundenen) Beschaffenheit in der Produktion, d.h. insbesondere einer Beschaffenheit des Produktes und/oder der Produktionsregel, angibt.

In einer weiteren vorteilhaften Ausführungsform ist vorgesehen, dass die Sensordaten einen Zeitstempel aufweisen und für das Auswerten der Sensordaten- oder Beobachtungspunkte, insbesondere mittels der selbstorganisierenden Karte, (Berechnen von Abständen zu Referenzpunkten, und den weiteren genannten Verfahrensschritte bzw. Teilen von Verfahrensschritten) diejenigen Sensordaten korreliert genutzt werden, deren zeitlicher Versatz gemäß Zeitstempel einem zeitlichen Versatz der zu den unterschiedlichen Sensordaten gehörigen (insbesondere aufeinander abfolgenden) Produktionsschritten entspricht. Das liefert die oben bereits beschriebenen Vorteile einer erhöhten Robustheit und Verlässlichkeit.

In einer anderen vorteilhaften Ausführungsform kann hier vorgesehen sein, dass durch die Recheneinheit an einen Nutzer eine Eingabemöglichkeit zur manuellen Eingabe in einer Ursache für den angezeigten Produktionsschritt und/oder den angezeigten Sensor und/oder die angezeigte Sensorgruppe und/oder den angezeigten Abstand und/oder den angezeigten Abstandsmittelwert angeboten wird. Entsprechend erfolgt dann durch die Recheneinheit in einem überwachten Lernmodus eines Lernalgorithmus' das Lernen einer Korrelation zwischen dem angezeigten Produktionsschritt und/oder dem angezeigten Sensor und/oder der angezeigten Sensorgruppe und/oder dem angezeigten Abstand und/oder den angezeigten Abstandsmittelwert zugrundeliegender Sensordaten und/oder dem ermittelten Abstand einerseits und der eingegebenen Ursache andererseits. Als Folge kann dann in einem Anwendungsmodus des im überwachten Lernmodus angelernten Lernalgorithmus' durch die Recheneinheit eine dem angezeigten Produktionsschritt und/oder dem angezeigten Sensor und/oder der angezeigten Sensorgruppe und/oder dem angezeigten Abstand zugeordnete Ursache angezeigt werden, basierend auf den dem angezeigten Produktionsschritt und/oder dem angezeigten Sensor und/oder der angezeigten Sensorgruppe und/oder dem angezeigten Abstand und/oder den angezeigten Abstandsmittelwert zugrunde liegenden abgebildeten Sensordaten und/oder dem ermittelten Abstand und/oder den ermittelten Abstandsmittelwert. Es können hier auch Konfidenzinformationen bezüglich der angezeigten Ursache angezeigt werden, um dem Nutzer einen Eindruck der Verlässlichkeit der angezeigten Ursache zu vermitteln. Es kann somit beispielsweise angegeben werden, dass bei einer gegebenen Anomalie von beispielsweise einer zu hohen Temperatur in einem Pressschritt eine verstopfte Leimdüse die Ursache war oder, bei einem Anzeigen der Konfidenzinformationen, mit einer ermittelten Wahrscheinlichkeit die Ursache war . Insbesondere kann auch eine der zugeordneten Ursache entsprechende Steueranweisung an einen Menschen oder eine Maschine ausgegeben werden. Das hat den Vorteil, dass nochmals mehr Wissen in der Recheneinheit und damit gegebenenfalls in der Produktionsanlage agglomeriert wird und wiederum die Handhabbarkeit der Produktion erhöht wird.

In einer weiteren vorteilhaften Ausführungsform ist vorgesehen, dass der oder die Produktionsschritte einen Leimaufbereitungsschritt und/oder einen Beleimungsschritt und/oder einen Formstationsschritt und/oder einen Formstrangschritt und/oder einen Pressschritt umfassen oder sind, insbesondere in der angegebenen Reihenfolge. In den genannten Produktionsschritten bzw. der genannten Kombination der Produktionsschritte haben sich die beschriebenen Verfahren als besonders vorteilhaft und effektiv erwiesen.

In einer weiteren vorteilhaften Ausführungsform ist vorgesehen, dass die Sensordaten zumindest eine Temperatur der Werkstoffplatte und/oder der Produktionsanlage und/oder zumindest eine Feuchtigkeit der Werkstoffplatte und/oder zumindest einen Füllstand der Produktionsanlage und/oder zumindest eine Ventil- oder Klappenstellung der Produktionsanlage und/oder zumindest einen Druck der Produktionsanlage und/oder zumindest eine Dichte der Werkstoffplatte und/oder zumindest eine Drehzahl der Produktionsanlage und/oder zumindest eine Fördergeschwindigkeit der Produktionsanlage und/oder zumindest eine Breite der Werkstoffplatte und/oder zumindest eine Dicke der Werkstoffplatte umfassen oder sind. Die genannten Sensordaten sind für die beschriebene Produktion besonders aussagekräftig und erlauben daher eine besonders effektive Anwendung der beschriebenen Verfahren.

In einer weiteren vorteilhaften Ausführungsform ist vorgesehen, dass einige oder alle der Sensordaten zumindest eines Produktionsschrittes, bevorzugt mehrerer oder aller Produktionsschritte, mittels eines oder mehrerer statistischer Verfahren, durch die Recheneinheit vorverarbeitet werden. Insbesondere kann das oder die statistischen Verfahren eine Normierung sein oder umfassen. Das Vorverarbeiten erfolgt dabei nach dem Erfassen der Sensordaten und vor den weiteren Verarbeitungsschritten. Das hat den Vorteil, dass die Robustheit der Verfahren erhöht werden kann und der Rechenaufwand in Summe vermindert werden kann.

Besonders vorteilhaft ist hier, wenn das oder die statischen Verfahren eine Mittelwertbildung und/oder eine Medianbildung und/oder eine Min-Max-Differenzbildung und/oder eine Varianzbildung der jeweiligen Sensordaten mehrerer gleichartiger Sensoren in einem den jeweiligen Sensoren gemeinsam zugeordneten jeweiligen einen oder mehreren Produktionsschritten und/oder eine zeitliche Mittelwertbildung und/oder eine zeitliche Medianbildung und/oder zeitliche Min-Max-Differenzbildung und/oder eine zeitliche Varianzbildung der jeweiligen Sensordaten eines jeweiligen Sensors eines oder mehrerer jeweiliger Produktionsschritte umfassen oder sind. Eine Min-Max-Differenzbildung beschreibt dabei das Berechnen der Differenz zwischen einem minimalen und maximalen Sensorwert. Die genannten statistischen Verfahren haben dabei den Vorteil, dass sie mathematisch gesehen relativ einfach gehalten sind, und zugleich hinsichtlich Robustheit und Verlässlichkeit der beschriebenen Verfahren deutliche Vorteile mit sich bringen.

Ein weiterer Aspekt betrifft eine Vorrichtung zum Durchführen eines der Verfahren der vorhergehenden Ansprüche, insbesondere eine Recheneinheit mit geeigneten Schnittstellen zur Produktionsanlage.

Vorteile und vorteilhafte Ausführungsformen der Vorrichtung bzw. der Recheneinheit entsprechen hier Vorteilen und vorteilhaften Ausführungsformen der beschriebenen Verfahren.

Die Erfindung soll beispielhaft anhand von zwei Figuren veranschaulicht werden.

Es zeigt:
Figur 1 einen dreidimensionalen Beobachtungsraum mit Referenzpunkten und Beobachtungspunkten;
Figur 2 die Abbildung eines mehrdimensionalen Beobachtungsraums auf einen zweidimensionalen Kartenraum.

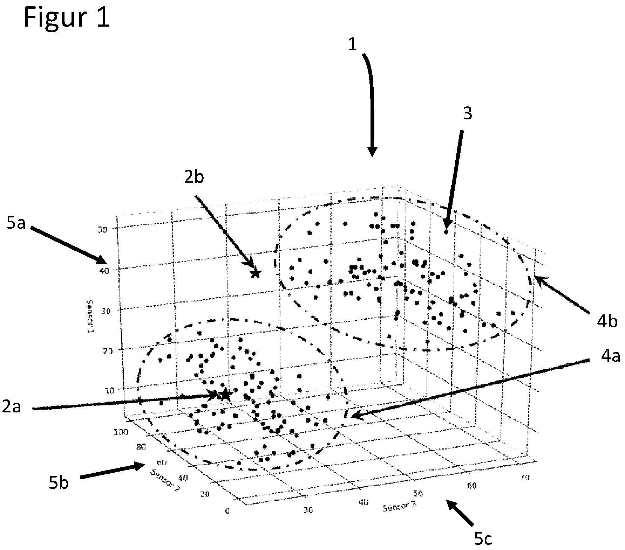

Figur 1 zeigt Referenzpunkte 3 und Beobachtungspunkte 2a, 2b in einem mehrdimensionalen Beobachtungsraum 1. Zur anschaulichen Darstellung ist beispielhaft ein dreidimensionaler Beobachtungsraum 1 gezeigt. Jede Dimension, das heißt jede Achse 5a, 5b, 5c des Beobachtungsraums 1 steht für einen Sensor einer Produktionsanlage für Werkstoffplatten, der ausgelesen werden kann. Die Sensoren können Daten unterschiedlicher Messgrößen liefern, wie beispielsweise Daten über Temperatur, Luftdruck, Füllstand oder Feuchtigkeit liefern. Unabhängig davon welche Messgröße jeder Sensor misst, können die Sensoren an unterschiedlichen Abschnitten der Produktionsanlage angeordnet sein. Dadurch können Daten von unterschiedlichen Abschnitten der Produktionsanlage erfasst werden. Es sind ebenso Ausführungsformen vorstellbar, in denen jeweils mehrere Sensoren an unterschiedlichen Abschnitten der Produktionsanlage angeordnet sind und Daten erfassen.

In der Figur 1 sind Referenzpunkte 3 gezeigt. Die Referenzpunkte 3 werden durch eine Recheneinheit ermittelt und repräsentieren eine Dichteverteilung vollständig erfasster Sensordaten im Beobachtungsraum 1. In dem in Figur 1 gezeigten Beispiel ordnen sich die Referenzpunkte 3 in zwei voneinander getrennten Punktwolken 4a, 4b an. Die beiden separierten Punktwolken 4a, 4b können als unterschiedliche normale Betriebszustände der Anlage interpretiert werden.

In Figur 1 sind die von den Sensoren erfassten Sensordaten als Beobachtungspunkte 2a, 2b im Beobachtungsraum 1 dargestellt. Beispielhaft sind ein erster Beobachtungspunkt 2a und ein zweiter Beobachtungpunkt 2b dargestellt. Die beiden Beobachtungspunkte 2a, 2b können beispielsweise die Sensordaten bzw. den Zustand der Produktionsanlage zu zwei unterschiedlichen Zeitpunkten repräsentieren.

Durch die Recheneinheit kann nun ein Abstand oder ein Abstandsmittelwert zwischen einem Beobachtungspunkt 2a, 2b und mindestens einem nächstliegenden Referenzpunkt 3 im Beobachtungsraum 1 ermittelt werden. Daraus kann bestimmt werden, ob sich die Produktionsanlage in einem normalen oder anormalen Betriebszustand befindet. Der erste Beobachtungspunkt 2a liegt beispielsweise innerhalb einer ersten Punktwolke 4a aus Referenzpunkten. Der zweite Beobachtungspunkt 2b liegt sowohl außerhalb der ersten Punktwolke 4a als auch außerhalb der zweiten Punktwolke 4b. Der Abstand des ersten Beobachtungspunkts 2a zum nächstliegenden Referenzpunkt ist in dem in Figur 1 gezeigten Beispiel kleiner als der Abstand des zweiten Beobachtungspunkts 2b zum nächstliegenden Referenzpunkt. Dies kann beispielsweise darauf hindeuten, dass der erste Beobachtungspunkt 2a einen normalen Zustand der Produktionsanlage wiedergibt. Der zweite Beobachtungspunkt 2b kann auf einen anomalen Zustand der Produktionsanlage hindeuten.

In einem weiteren Verfahrensschritt kann durch die Recheneinheit anschließend ermittelt werden, welcher Sensor bzw. welcher Sensorgruppe bzw. Abschnitt der Produktionsanlage bzw. welcher Produktionsschritt den Abstand zum nächstliegenden Referenzpunkt bestimmt. Betrachtet man beispielsweise den zweiten Beobachtungspunkt 2b, kann dadurch ermittelt werden welcher Sensor bzw. welcher Sensorgruppe bzw. Abschnitt der Produktionsanlage bzw. welcher Produktionsschritt für das Auftreten eines anomalen Zustand maßgeblich beiträgt.

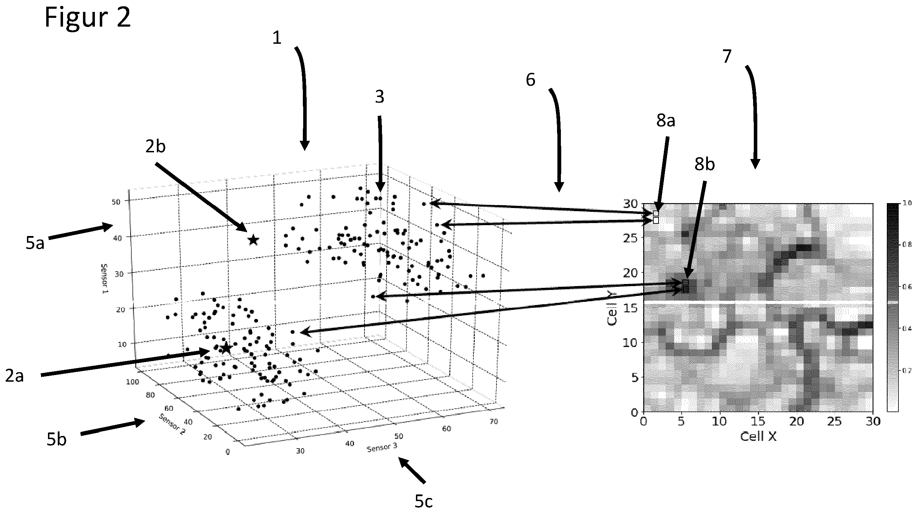

Figur 2 zeigt einen Beobachtungsraum 1 und einen zweidimensionalen Kartenraum 7. Der Beobachtungsraum 1 der Figur 2 ist der gleiche dreidimensionale Beobachtungsraum 1 der bereits in Figur 1 gezeigt wird.

Der zweidimensionale Kartenraum 7 ist in Zellen 8a, 8b unterteilt, die jeweils eindeutig einem Referenzpunkt 3 des Beobachtungsraums 1 zugeordnet werden können. Die Zuordnung ist beispielhaft durch Abbildungspfeile 6 visualisiert. Die Anzahl der Zellen im Kartenraum 7 ist also gleich der Anzahl an Referenzpunkten 3 im Beobachtungsraum 1. Jede Zelle des Kartenraums 7 ist eingefärbt. Die Farbe einer Zelle ist ein Maß für den Abstand des zugehörigen Referenzpunktes zu den zugehörigen Referenzpunkten der benachbarten Zellen. Eine hellere Färbung der Zelle deutet beispielsweise darauf hin, dass die Referenzpunkte, die zu den benachbarten Zellen gehören, innerhalb derselben Punktwolke liegen. Ein Beispiel dafür ist die Zelle 8a. Eine dunklere Färbung deutet auf Referenzpunkte 3 hin, die am Rand unterschiedlicher Punktwolken liegen. Ein Beispiel dafür ist die Zelle 8b. Verschiedenen Bereichen der zweidimensionalen Karte können Qualitäts-Indikatorwerte zugeordnet werden.

Erfasste Sensordaten, also Beobachtungspunkte 2a, 2b, können durch die Recheneinheit im zweidimensionalen Kartenraum 7 abgebildet werden. Die Abbildung erfolgt durch den jeweils nächstliegenden Referenzpunkt 3 und dessen Entsprechung im Kartenraum 7. Dies kann mittels eines angelernten neuronalen Netzes, insbesondere mittels einer entsprechend angelernten selbstorganisierenden Karte erfolgen.

Außerdem kann ein zulässiger Maximalabstand und/oder zulässiger Maximalabstandsmittelwert für den Beobachtungspunkt/Sensordatenpunkt von dem nächstliegenden Referenzpunkt oder den nächstliegenden Referenzpunkten vorgegeben werden. Dabei kann der Maximalabstand/Maximalabstandsmittelwert insbesondere als Funktion des mit dem zumindest einen Bereich in dem Kartenraum verknüpften Qualitäts-Indikatorwert vorgegeben sein. Es kann überprüft werden, ob der ermittelte Abstand/der ermittelte Abstandmittelwert größer ist als der zulässige Maximalabstand/Maximalabstandsmittelwert. Falls dies der Fall ist, insbesondere nur falls dies der Fall ist, kann beispielsweise der Produktionsschritt und/oder des Sensors ermittelt werden, der diesen Abstand im Beobachtungsraum maßgeblich bestimmt. Alternativ oder ergänzend, kann ein Anzeigen des ermittelten Produktschrittes und/oder Sensors und, alternativ oder ergänzend, ein Ausgeben einer optischen und/oder akustischen Warnung und/oder der Steueranweisung und/oder Überprüfungsanweisung an eine elektronische Einheit und/oder einen Nutzer erfolgen. Dadurch wird die Produktion von Werkstoffplatten nochmals beherrschbarer.

Da dieses Verfahren im Wesentlichen die Referenzpunkte im Beobachtungsraum und deren Entsprechung im Kartenraum nutzt, wird sehr wenig Speicherplatz benötigt und die Auswertung für einen Beobachtungspunkt kann schnell durchgeführt werden. Es hat sich auch gezeigt, dass dieses Verfahren für gegebene Werkstoffplatten-Produktionsanlagen, insbesondere auf eine kontinuierliche Produktion ausgelegte Werkstoffplatten-Produktionsanlagen, trotz der Vielzahl an stark variierenden Sensordaten sehr robust ist.

### Bezugszeichenliste:

- 1: Beobachtungsraum
- 2a: erster Beobachtungspunkt
- 2b: zweiter Beobachtungspunkt
- 3: Referenzpunkt
- 4a: erste Punktwolke
- 4b: zweite Punktwolke
- 5a: erste Achse
- 5b: zweite Achse
- 5c: dritte Achse
- 6: Abbildungspfeile
- 7: zweidimensionaler Kartenraum
- 8a: erste Zelle
- 8b: zweite Zelle

## Patentansprüche

1. Überwachungsverfahren der Produktion einer Werkstoffplatte, insbesondere einer Holzwerkstoffplatte, mit den Verfahrensschritten:
- jeweiliges Erfassen von Sensordaten in den Produktionsschritten der Produktion der Werkstoffplatte, durch die jeweiligen Sensoren der Werkstoffplatten-Produktionsanlage;
- Ermitteln von Referenzpunkten in einem vieldimensionalen Eingabedatenraum der Sensordaten, dem Beobachtungsraum, wobei die Referenzpunkte eine Dichteverteilung vollständig erfasster Sensordaten in dem Beobachtungsraum repräsentieren, durch eine Recheneinheit;
- Ermitteln eines Abstands oder Abstandsmittelwertes zwischen einem den erfassten Sensordaten entsprechenden Beobachtungspunkt und mindestens einem nächstliegenden Referenzpunkt im Beobachtungsraum, durch die Recheneinheit;
- Ermitteln des Produktionsschrittes und/oder des Sensors und/oder der Sensorgruppe, dessen/deren Sensordaten den ermittelten Abstand oder Abstandsmittelwert bestimmen, durch die Recheneinheit;
- Anzeigen des ermittelten Produktionsschrittes und/oder des ermittelten Sensors und/oder der ermittelten Sensorgruppe und/oder des ermittelten Abstands und/oder des ermittelten Abstandsmittelwertes, durch eine Anzeigeeinheit; wobei das Verfahren die folgenden Verfahrensschritte umfasst:
- Vorgeben eines zulässigen Maximalabstandes oder Maximalabstandsmittelwertes für den Beobachtungspunkt von dem zumindest einen nächstliegenden Referenzpunkt;
- Überprüfen, ob der ermittelte Abstand oder Abstandsmittelwert größer ist als der zulässige Maximalwert; und, falls ja:
- Ermitteln des Produktionsschrittes und/oder des Sensors, und/oder das Anzeigen des ermittelten Produktionsschrittes und/oder Sensors, und/oder Ausgeben einer optischen und/oder akustischen Warnung;
- Abbilden der erfassten Sensordaten auf einen zweidimensionalen Kartenraum durch den nächstliegenden Referenzpunkt und dessen Entsprechung im Kartenraum mittels eines angelernten neuronalen Netzes durch die Recheneinheit; und
- Vorgeben eines Qualitäts-Indikatorwertes für zumindest einen Bereich im Kartenraum, wobei der Maximalabstand als Funktion des mit dem zumindest einen Bereich im Kartenraum verknüpften Qualitäts-Indikatorwert vorgegeben ist.

2. Verfahren nach einem der vorhergehenden Ansprüche,
**dadurch gekennzeichnet, dass**
die Sensordaten einen Zeitstempel aufweisen und für das Ermitteln der einem Beobachtungspunkt nächstgelegenen Referenzpunkte diejenigen Sensordaten korreliert genutzt werden, deren zeitlicher Versatz gemäß Zeitstempel einem zeitlichen Versatz der zu den unterschiedlichen Sensordaten gehörigen, insbesondere aufeinander abfolgenden, Produktionsschritten entspricht.

3. Verfahren nach einem der vorhergehenden Ansprüche,
**gekennzeichnet durch** ein
- Anbieten einer Eingabemöglichkeit zum manuellen Eingeben einer Ursache für den angezeigten Produktionsschritt und/oder den angezeigten Sensor und/oder die angezeigte Sensorgruppe und/oder den angezeigten Abstand und/oder den angezeigten Abstandsmittelwert, durch die Recheneinheit, und
- Lernen, in einem überwachten Lernmodus eines Lernalgorithmus', einer Korrelation zwischen den dem angezeigten Produktionsschritt und/oder dem angezeigten Sensor und/oder der angezeigten Sensorgruppe und/oder dem angezeigten Abstand und/ oder dem angezeigten Abstandsmittelwert zugrunde liegenden Sensordaten einerseits und der eingegebenen Ursache andererseits, durch die Recheneinheit; und/oder
- Anzeigen, in einem Anwendungsmodus des im überwachten Lernmodus angelernten Lernalgorithmus', einer dem angezeigten Produktionsschritt und/oder dem angezeigten Sensor und/oder der angezeigten Sensorgruppe und/oder dem angezeigten Abstand und/oder dem angezeigten Abstandsmittelwert zugeordnete Ursache basierend auf den dem angezeigten Produktionsschritt und/oder dem angezeigten Sensor und/oder der angezeigten Sensorgruppe und/oder dem angezeigten Abstand und/oder dem angezeigten Abstandsmittelwert zugrunde liegenden Sensordaten.

4. Verfahren nach einem der vorhergehenden Ansprüche,
**dadurch gekennzeichnet, dass**
der oder die Produktionsschritte einen Leimaufbereitungsschritt und/oder einen Beleimungsschritt und/oder einen Formstationsschritt und/oder einen Formstrangschritt und/oder einen Pressschritt umfassen oder sind, insbesondere in der angegebenen Reihenfolge.

5. Verfahren nach einem der vorhergehenden Ansprüche,
**dadurch gekennzeichnet, dass**
die Sensordaten zumindest eine Temperatur der Werkstoffplatte und/oder der Produktionsanlage und/oder zumindest eine Feuchtigkeit der Werkstoffplatte und/oder zumindest einen Füllstand der Produktionsanlage und/oder zumindest eine Ventil- oder Klappenstellung der Produktionsanlage und/oder zumindest einen Druck der Produktionsanlage und/oder zumindest eine Dichte der Werkstoffplatte und/oder zumindest eine Drehzahl der Produktionsanlage und/oder zumindest eine Fördergeschwindigkeit der Produktionsanlage und/oder zumindest eine Breite der Werkstoffplatte und/oder zumindest eine Dicke der Werkstoffplatte umfassen oder sind.

6. Verfahren nach einem der vorhergehenden Ansprüche,
**gekennzeichnet durch** ein
- Vorverarbeiten mehrerer der Sensordaten zumindest eines Produktionsschrittes mittels eines oder mehrerer statistischer Verfahren, insbesondere mittels einer Normierung, durch die Recheneinheit.

7. Verfahren nach dem vorhergehenden Anspruch,
**gekennzeichnet durch** eines oder mehrere
statistische Verfahren, welche eine Mittelwertbildung und/oder eine Medianbildung und/oder eine Min-Max-Differenzbildung und/oder eine Varianzbildung der Sensordaten mehrerer gleichartiger Sensoren in einem den jeweiligen Sensoren gemeinsam zugeordneten Produktionsschritt und/oder eine zeitliche Mittelwertbildung und/oder eine zeitliche Medianbildung und/oder eine zeitliche Min-Max-Differenzbildung und/oder eine zeitliche Varianzbildung der Sensordaten eines jeweiligen Sensors umfassen oder sind.

8. Verfahren nach einem der vorhergehenden Ansprüche,
**dadurch gekennzeichnet, dass**
das Verfahren zur Vorhersage von Produktionsstillständen eingesetzt wird.

9. Verfahren nach einem der vorhergehenden Ansprüche,
**dadurch gekennzeichnet, dass**
das Verfahren zum Erkennen von Qualitätsveränderungen eingesetzt wird.

10. Vorrichtung zum Durchführen eines der Verfahren der vorhergehenden Ansprüche, insbesondere Recheneinheit mit geeigneten Schnittstellen zu der Produktionsanlage.

## Claims

1. A monitoring method for the production of a material panel, in particular a wood-based panel, comprising the method steps:
- respective acquisition of sensor data in the production steps of the production of the material panel, by the respective sensors of the material panel production plant;
- determination of reference points in a multidimensional input data space of the sensor data, the observation space, wherein the reference points represent a density distribution of completely acquired sensor data in the observation space, by a computing unit;
- determination of a distance or average distance value between an observation point corresponding to the acquired sensor data and at least one nearest reference point in the observation space, by the computing unit;
- determination of the production step and/or the sensor and/or the sensor group whose sensor data determine the determined distance or average distance value, by the computing unit;
- display of the determined production step and/or the determined sensor and/or the determined sensor group and/or the determined distance and/or the determined average distance value, by a display unit; wherein the method comprises the following methods steps:
- specification of a permissible maximum distance or maximum mean distance value for the observation point from the at least one nearest reference point;
- verifying whether the determined distance or average distance value is greater than the permissible maximum value; and, if yes:
- determining the production step and/or the sensor, and/or displaying the determined production step and/or sensor, and/or outputting a visual and/or acoustic warning;
- mapping of the acquired sensor data onto a two-dimensional map space by the nearest reference point and its correspondence in the map space by means of a trained neural network by the computing unit; and
- specifying a quality indicator value for at least one region in the map space, wherein the maximum distance is specified as a function of the quality indicator value associated with the at least one region in the map space.

2. The method according to any one of the preceding claims,
**characterized in that**
the sensor data have a time stamp and, for determining the reference points closest to an observation point, those sensor data are used in correlation whose time offset according to the time stamp corresponds to a time offset of the production steps belonging to the different sensor data, in particular successive production steps.

3. The method according to any one of the preceding claims,
**characterized by** a
- providing an input option for manually entering a cause for the displayed production step and/or the displayed sensor and/or the displayed sensor group and/or the displayed distance and/or the displayed average distance value, by the computing unit, and
- learning, in a supervised learning mode of a learning algorithm, a correlation between the sensor data underlying the displayed production step and/or the displayed sensor and/or the displayed sensor group and/or the displayed distance and/or the displayed average distance value on the one hand and the input cause on the other hand, by the computing unit; and/or
- displaying, in an application mode of the learning algorithm taught in the supervised learning mode, a cause associated with the displayed production step and/or the displayed sensor and/or the displayed sensor group and/or the displayed distance and/or the displayed average distance value based on the sensor data underlying the displayed production step and/or the displayed sensor and/or the displayed sensor group and/or the displayed distance and/or the displayed average distance value.

4. The method according to any one of the preceding claims,
**characterized in that**
the production step(s) comprise a glue preparation step and/or a gluing step and/or a forming station step and/or a forming strand step and/or a pressing step, in particular in the order indicated.

5. The method according to any one of the preceding claims,
**characterized in that**
the sensor data comprise or are at least one temperature of the material panel and/or of the production plant and/or at least one humidity of the material panel and/or at least one filling level of the production plant and/or at least one valve or flap position of the production plant and/or at least one pressure of the production plant and/or at least one density of the material panel and/or at least one rotational speed of the production plant and/or at least one conveying speed of the production plant and/or at least one width of the material panel and/or at least one thickness of the material panel.

6. The method according to any one of the preceding claims,
**characterized by** a
- pre-processing of several of the sensor data of at least one production step by means of one or more statistical methods, in particular by means of normalization, by the computing unit.

7. The method according to the preceding claim,
**characterized by** one or more
statistical methods which comprise or are an averaging and/or a median formation and/or a min-max differentiation and/or a variance formation of the sensor data of several sensors of the same type in a production step jointly assigned to the respective sensors and/or a temporal averaging and/or a temporal median formation and/or a temporal min-max differentiation and/or a temporal variance formation of the sensor data of a respective sensor.

8. The method according to any one of the preceding claims,
**characterized in that**
the method is used to predict production downtimes.

9. The method according to any one of the preceding claims,
**characterized in that**
the method is used to detect changes in quality.

10. A device for carrying out one of the methods of the preceding claims, in particular a computing unit with suitable interfaces to the production plant.

## Revendications

1. Procédé de surveillance de la production d'un panneau de matériau, en particulier d'un panneau en matériau dérivé du bois, avec les étapes de procédé :
- l'acquisition respective de données de capteur aux étapes de production du panneau de matériau, par les capteurs respectifs de l'installation de production de panneaux de matériau ;
- la détermination de points de référence dans un espace de données de saisie multidimensionnel des données de capteur, l'espace d'observation, dans lequel les points de référence représentent une distribution de densité de données de capteur entièrement acquises dans l'espace d'observation, par une unité de calcul ;
- la détermination d'une distance ou valeur moyenne de distance entre un point d'observation correspondant aux données de capteur acquises et au moins un point de référence le plus proche dans l'espace d'observation, par l'unité de calcul ;
- la détermination de l'étape de production et/ou du capteur et/ou du groupe de capteurs dont les données de capteur définissent la distance ou valeur moyenne de distance déterminée, par l'unité de calcul ;
- l'affichage de l'étape de production déterminée et/ou du capteur déterminé et/ou du groupe de capteurs déterminé et/ou de la distance déterminée et/ou de la valeur moyenne de distance déterminée, par une unité d'affichage ; dans lequel le procédé comprend les étapes de procédé suivantes :
- la spécification d'une distance maximale admissible ou valeur moyenne de distance maximale pour le point d'observation par rapport à l'au moins un point de référence le plus proche ;
- le fait de vérifier si la distance ou valeur moyenne de distance déterminée est supérieure à la valeur maximale admissible ; et, dans ce cas :
- la détermination de l'étape de production et/ou du capteur, et/ou l'affichage de l'étape de production et/ou du capteur déterminé(e), et/ou l'émission d'un avertissement optique et/ou acoustique ;
- la représentation des données de capteur acquises sur un espace cartographique bidimensionnel par le point de référence le plus proche et sa correspondance dans l'espace cartographique au moyen d'un réseau neuronal entraîné par l'unité de calcul ; et
- la prescription d'une valeur d'indicateur de qualité pour au moins une zone dans l'espace cartographique, dans lequel la distance maximale est prescrite en fonction de la valeur d'indicateur de qualité associée à l'au moins une zone dans l'espace cartographique.

2. Procédé selon l'une quelconque des revendications précédentes,
**caractérisé en ce que**
les données de capteur présentent un horodatage et, pour la détermination des points de référence les plus proches d'un point d'observation, on utilise de manière corrélée les données de capteur dont le décalage dans le temps selon l'horodatage correspond à un décalage dans le temps des étapes de production, en particulier successives, appartenant aux différentes données de capteur.

3. Procédé selon l'une quelconque des revendications précédentes,
**caractérisé par** un
- fait d'offrir une possibilité de saisie pour saisir manuellement une cause pour l'étape de production affichée et/ou le capteur affiché et/ou le groupe de capteurs affiché et/ou la distance affichée et/ou la valeur moyenne de distance affichée, par l'unité de calcul, et
- apprentissage, dans un mode d'apprentissage supervisé d'un algorithme d'apprentissage, d'une corrélation entre les données de capteur servant de base à l'étape de production affichée et/ou au capteur affiché et/ou au groupe de capteurs affiché et/ou à la distance affichée et/ou à la valeur moyenne de distance affichée, d'une part, et la cause saisie, d'autre part, par l'unité de calcul ; et/ou
- affichage, dans un mode d'application de l'algorithme d'apprentissage entraîné en mode d'apprentissage supervisé, d'une cause affectée à l'étape de production affichée et/ou au capteur affiché et/ou au groupe de capteurs affiché et/ou à la distance affichée et/ou à la valeur moyenne de distance affichée en s'appuyant sur les données de capteur servant de base à l'étape de production affichée et/ou au capteur affiché et/ou au groupe de capteurs affiché et/ou à la distance affichée et/ou à la valeur moyenne de distance affichée.

4. Procédé selon l'une quelconque des revendications précédentes,
**caractérisé en ce que**
l'étape ou les étapes de production comprennent ou sont une étape de préparation de colle et/ou une étape d'encollage et/ou une étape de station de formage et/ou une étape de barre de formage et/ou une étape de pressage, en particulier dans l'ordre indiqué.

5. Procédé selon l'une quelconque des revendications précédentes,
**caractérisé en ce que**
les données de capteur comprennent ou sont au moins une température du panneau de matériau et/ou de l'installation de production et/ou au moins une humidité du panneau de matériau et/ou au moins un niveau de remplissage de l'installation de production et/ou au moins une position de soupape ou de clapet de l'installation de production et/ou au moins une pression de l'installation de production et/ou au moins une densité du panneau de matériau et/ou au moins une vitesse de rotation de l'installation de production et/ou au moins une vitesse de transport de l'installation de production et/ou au moins une largeur du panneau de matériau et/ou au moins une épaisseur du panneau de matériau.

6. Procédé selon l'une quelconque des revendications précédentes,
**caractérisé par** un
- prétraitement par l'unité de calcul de plusieurs des données de capteur au moins d'une étape de production au moyen d'un ou plusieurs procédés statistiques, en particulier au moyen d'une normalisation.

7. Procédé selon la revendication précédente,
**caractérisé par** un ou plusieurs
procédés statistiques qui comprennent ou sont une formation de moyenne et/ou une formation de médiane et/ou une formation de différence min-max et/ou une formation de variance des données de plusieurs capteurs du même type dans une étape de production affectée en commun aux capteurs respectifs et/ou une formation de moyenne dans le temps et/ou une formation de médiane dans le temps et/ou une formation de différence min-max dans le temps et/ou une formation de variance dans le temps des données de capteur d'un capteur respectif.

8. Procédé selon l'une quelconque des revendications précédentes,
**caractérisé en ce que**
le procédé est utilisé pour prédire les arrêts de production.

9. Procédé selon l'une quelconque des revendications précédentes,
**caractérisé en ce que**
le procédé est utilisé pour détecter des changements de qualité.

10. Dispositif pour la mise en œuvre de l'un des procédés des revendications précédentes, en particulier unité de calcul avec des interfaces appropriées pour l'installation de production.
